# EUROPÄISCHE PATENTSCHRIFT

(11) **EP 2 830 194 B1**
(45) Veröffentlichungstag und Bekanntmachung des Hinweises auf die Patenterteilung: **17.05.2017**
(21) Anmeldenummer: 13178216.1
(22) Anmeldetag: 26.07.2013
(51) Int. Cl.: H02K 3/34, H02K 3/52

(54) **Stator einer dynamoelektrischen rotatorischen Maschine**
Stator of a dynamo-electric rotational machine
Stator d'une machine rotative dynamoélectrique

(43) Veröffentlichungstag der Anmeldung: 28.01.2015
(73) Patentinhaber: Siemens Aktiengesellschaft, 80333 München (DE)
(72) Erfinder: Grübel, André, Dr., 90768 Fürth (DE); Hößelbarth, Daniel, 90441 Nürnberg (DE)

(56) Entgegenhaltungen:
- JP-A- 2009 189 138
- US-A1- 2007 278 875
- US-A1- 2012 146 434
- US-A1- 2012 228 986

## Beschreibung

Die Erfindung betrifft einen Stator einer dynamoelektrischen Maschine und eine dynamoelektrische rotatorische Maschine.

Statoren dynamoelektrischer rotatorischer Maschinen, weisen einen Hohlkörper auf, der als hohlzylindrischer Formkörper ausgebildet ist. Der hohlzylindrische Formkörper wird durch axial geschichtete Bleche gebildet. In der Mitte dieses hohlzylindrischen Formkörpers, also in der Statorbohrung dreht sich im Betrieb der dynamoelektrischen rotatorischen Maschine ein Rotor, der mit einer Arbeitsmaschine gekoppelt ist.

Zwischen Rotor und Stator befindet sich der Luftspalt der dynamoelektrischen Maschine über den eine elektromagnetische Wechselwirkung zwischen einem Wicklungssystem des Stators und dem Rotor stattfindet, die eine Drehung des Rotors bewirkt.

Das Wicklungssystem im Stator ist dabei in Nuten des durch axial geschichtete Bleche gebildeten Blechpakets angeordnet, wobei die Nuten durch Zähne gebildet werden, die radial von einem Jochrücken des Blechpakets des Stators nach innen zur Statorbohrung weisen.

Das Wicklungssystem des Stators ist aus gesehnten Wicklungen oder aus Zahnspulen aufgebaut. Wenn der Stator Zahnspulen aufweist, sind diese auf Spulenkörper positioniert, die wiederum die Zähne umfassen. Dabei ist eine Fixierung der Spulenkörper am Zahn des Stators äußerst wichtig. Des weiteren liegen in einer Nut Spulenseiten unterschiedlicher Zahnspulen, die im Betrieb von unterschiedliche Phasen U, V, W bestromt werden können und somit gegeneinander und auch gegen das Blechpaket elektrisch isoliert werden müssen.

Aus diesem Grund wird gemäß der EP 1 322 021 A1 ein Stator vorgeschlagen wobei zwischen den Spulenseiten einer Nut diese durch eine Zwischenplatte isolationstechnisch voneinander getrennt sind. Um auch in kritischen Zonen, insbesondere an den Rändern, eine Isolation zu erhalten, wird die Schutzstrecke durch Radialflansche des Spulenträgers gewährleistet.

Nachteilig dabei ist der erhöhte Arbeitsaufwand bei der Herstellung eines derartigen Stators.

Aus der US 2012/146434 A1 ist ein Stator einer dynamoelektrischen rotatorischen Maschine gemäß dem Oberbegriff des Anspruchs 1 bekannt.

Ausgehend davon liegt der Erfindung die Aufgabe zugrunde, eine vereinfachte Herstellung eines Stators einer dynamoelektrischen rotatorischen Maschine zu schaffen, die außerdem eine Positionierung des Wicklungssystems gewährleistet.

Die Lösung der gestellten Aufgabe gelingt durch einen Stator einer dynamoelektrischen rotatorischen gemäß Anspruch 1.

Der erfindungsgemäße Stator weist somit vorteilhafterweise parallelflankige Zähne auf, über die in einfacher Art und Weise der bewickelte Spulenkörper von der Statorbohrung aus eingesetzt werden kann.

Ebenso können die Zähne leicht trapezförmig geformt sein, so dass die Breite der Zähne radial nach außen zunimmt - also die Nutbreite radial nach außen abnimmt. Dies schafft eine bessere Anlage der Spulenkörper am Zahn.

Der Isolierkörper mit seinem H-förmigen Querschnitt, der auch als Doppel-T-Isolator oder "I"-Isolator bezeichnet kann, ist in einfacher Art und Weise axial in die Nut zwischen zwei Spulenseiten eingesetzt. Dabei bewirkt er die elektrische Isolation der benachbarten Abschnitte der Spulen in einer Nut und/oder eine elektrische Isolation der Spulen zum geerdeten Blechpaket des Stators und/oder eine Vergrößerung der elektrischen Kriechwege und/oder eine mechanische Sicherung der Spulen in der Nut in Richtung Luftspalt der dynamoelektrischen Maschine.

Der Isolierkörper ist vorzugsweise aus den bekannten Isoliermaterialien auf Kunststoffbasis aufgebaut.

Diese mechanische Sicherung der Spulen bzw. der bewickelten Spulenkörper in der Nut wird dadurch gewährleistet, dass sich ein Seitenteil des H-förmigen Isolierkörpers auf der der Statorbohrung zugewandten Seite in vorgegebene Ausnehmungen im Zahnkopfbereich anliegt, in vorgegebene Ausnehmungen im Zahnkopfbereich eingreift oder sogar einrastet.

Vor allem bei rotatorischen dynamoelektrischen Maschinen deren Nutgrund gegebenenfalls rundlich ausgeführt ist, wird eine Anpassung des Seitenteils des Isolierkörpers auch am Nutgrund dadurch geschaffen, indem diese Seitenteile flexibel ausgeführt. Dadurch werden die vorhandenen Hohlräume in der Nut möglichst verringert. Damit kann der Kupferfüllfaktor in der Nut erhöht werden, was zu einer Verbesserung der elektrischen Betriebsdaten der dynamoelektrischen Maschine führt, wie z.B. Erhöhung des Drehmoments.

Durch die Reduzierung der Hohlräume wird auch die Verlustwärme aus der Spule und aus dem gesamten Wicklungssystem des Stators besser abgeführt.

Zumindest die Seitenteile des Isolierkörpers auf der Seite der Nutöffnung sind starr ausgeführt. Dies führt zu einer verbesserten Stabilität des Isolierkörpers in der Nut. Dabei sind die Seitenteile entweder eben oder gekrümmt ausgeführt.

Es kann auch ein Seitenteil eben und das andere gekrümmt ausgeführt sein.

Die Erfindung sowie weitere vorteilhafte Ausgestaltungen der Erfindung werden anhand der Ausführungsbeispiele näher erläutert. Darin zeigen
- FIG 1: im Längsschnitt die prinzipiellen Aktivteile einer dynamoelektrischen Maschine,
- FIG 2: den Querschnitt eines Blechpakets eines Stators ohne Wicklungssystem und
- FIG 3: eine teilperspektivische Ansicht eines Stators.

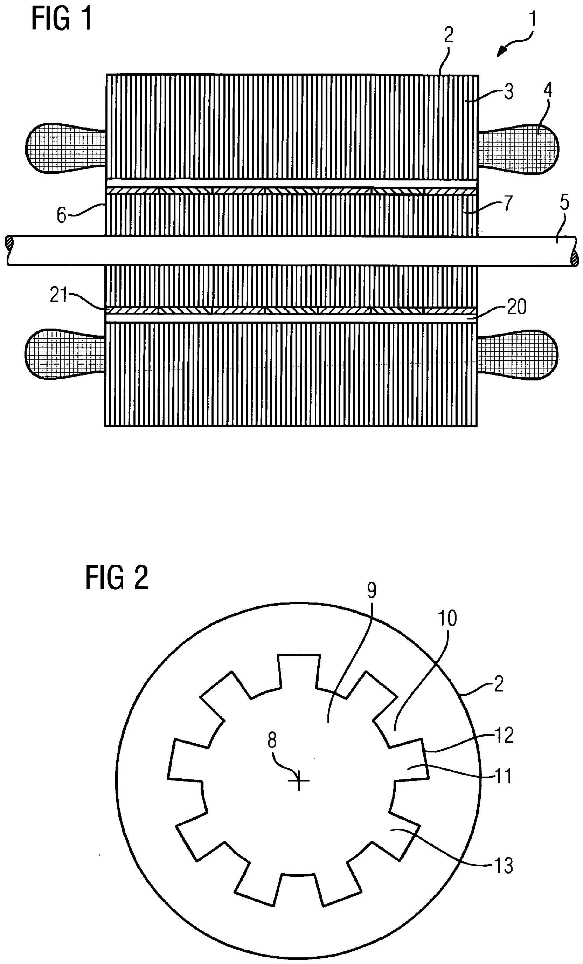

FIG 1 zeigt eine dynamoelektrische rotatorische Maschine 1, die einen Stator 2 aufweist, der mit Statorblechen 3 axial geschichtet ist. Über einen Luftspalt 20 wechselwirkt das Wicklungssystem des Stators 2 mit einem Rotor 6 und führt so zur Drehung dieser Maschine.

Der Rotor 6 weist in dem vorliegenden Fall, in dem es sich um eine permanentmagneterregte Synchronmaschine handelt, Oberflächenmagnete 21 auf. Der erfindungsgemäße Gedanke kann selbstverständlich auch bei Rotoren 6 mit vergrabenen Magneten umgesetzt werden.

Eine derartige dynamoelektrische rotatorische Maschine 1 ist ebenso als Generator einsetzbar.

Ebenso kann der erfinderische Gedanke auch für Außenläufermaschinen verwendet werden.

FIG 2 zeigt im Querschnitt ein Statorblechpaket 3 mit einer Achse 8 in der Statorbohrung 9 um die sich letztlich eine Welle 5 die drehfest mit einen Rotor 6 verbunden ist, dreht. Zur Statorbohrung 9 hin weisen radial ausgerichtete Zähne 10, die durch Nuten 11 voneinander beabstandet sind. Jede Nut 11 weist dabei eine Nutöffnung 13 und einen Nutgrund 12 auf. Die Zähne 10 sind dabei in ihrem Querschnitt - wie dargestellt - trapezförmig oder parallelflankig ausgeführt. Bei trapezförmiger Gestaltung der Zähne 10 liegen die Spulenkörper 14 konstruktionsbedingt direkt am Zahn 10 an ohne dass Spalte zwischen Zahn 10 und Spulenkörper 14 auftreten.

Es sind somit die Nuten 11 oder die Zähne 10 parallelflankig ausgeführt. Demzufolge sind dann die Zähne 10 oder die Nuten 11 trapezförmig gestaltet.

In einer weiteren - nicht näher dargestellten - Ausführung sind sowohl Zähne 10 als auch Nuten 11 jeweils leicht trapezförmig ausgeführt.

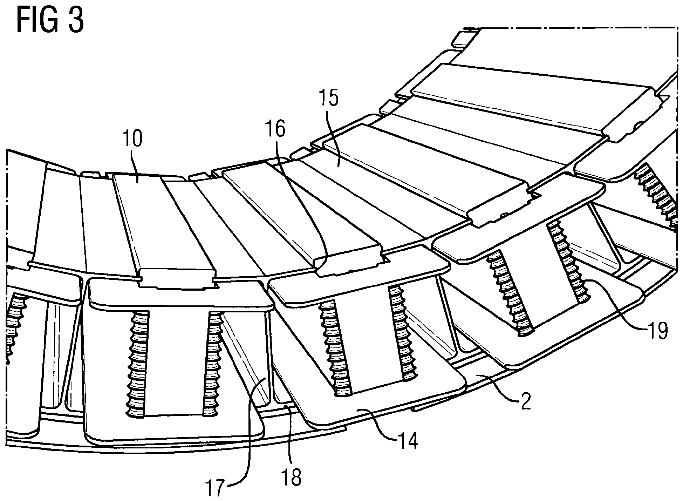

Wie dies auch FIG 3 zeigt, ist jeder Zahn 10 mit einem Spulenkörper 14 versehen, der gemäß FIG 3 aus Gründen der Übersichtlichkeit ohne Wicklung dargestellt ist.

Der Spulenkörper 14 weist an seinen Stirnseiten und/oder Längsseiten Riffelungen 19 bzw. Führungsrillen auf, um die Windungen einer Spule beim Wickelvorgang positionsgenau legen zu können. Diese Riffelungen 19 bzw. Führungsrillen sind vorzugsweise auf den Schaft des Spulenkörpers 14 beschränkt, der direkt am Zahn anliegt und um den die Windungen der Spule auf dem Spulenkörper 14 verlaufen.

Der Spulenkörper 14 ist mit vorzugsweise blankem oder isoliertem Draht oder anderen elektrischen Leitern bewickelt und bildet so eine Spule auf dem Spulenkörper 14. Die Zähne 10 werden durch diese bewickelten Spulenkörper 14 von der Statorbohrung 9 aus bestückt. Anschließend wird ein Isolierkörper 15 axial zwischen die Zähne 10 in einer Nut 11 eingesetzt, so dass ein Mittelstück des H-förmigen Isolierkörpers 15 eine elektrische Trennung zwischen den Spulenseiten benachbarter Spulen bilden. Der Isolierkörper 15 ist H-förmig gestaltet, so dass sich an ein Mittelstück oben und unten jeweils ein Seitenteil anschließen. Dabei gewährleisten diese Seitenteile des H-förmigen Isolierkörpers 15 zum einen am Nutgrund 12 die elektrischen Schutzstrecken zum Blechpaket und zu Spulen der benachbarten Phasen. Des Weiteren gewährleisten diese Seitenteile neben der Schutzstrecke, zur Seite der Statorbohrung 9 hin - also im Bereich der Nutöffnung 13 - auch eine Fixierung der Spulenkörper 14 in der Nut 11. Dies wird dadurch erreicht in dem die Seitenteile des Isolierkörpers 15 in Ausnehmungen 16 der Zähne 10 zumindest abschnittsweise anliegen, eingreifen oder einrasten.

Die Ausdehnung der Seitenteile eines Isolierkörpers 15 in Umfangsrichtung ist am Nutgrund 12 maximal die Ausdehnung des Nutgrundes 12 und an der Nutöffnung 13 maximal etwas breiter als der Abstand benachbarter Zähne 10 um ein Eingreifen oder Einrasten in den Kopf des Zahnes 10 zu erhalten..

Die Spulen jeder elektrischen Phase U, V, W werden in geeigneter Weise miteinander kontaktiert, so dass ein dreiphasiges Wicklungssystem des Stators 2 vorliegt. Diese gesamte Wicklungsanordnung kann selbstverständlich auch mit dementsprechenden Mitteln und Verfahren vergossen und/oder getränkt werden.

## Patentansprüche

1. Stator (2) einer dynamoelektrischen rotatorischen Maschine (1), der einen hohlzylindrischen Körper bildet, wobei dementsprechend ausgestaltete Bleche (3) in axialer Richtung geschichtet sind und diesen zylindrischen Hohlkörper mit einer Statorbohrung (9) ausbilden, wobei der zylindrischen Hohlkörper in axialer Richtung Zähne (10) und axial verlaufende Nuten (11) aufweist, wobei die parallelflankigen oder trapezförmigen Zähne (10) jeweils von einem Spulenkörper (14) umgeben sind, wobei der Spulenkörper (14) mit zumindest einem elektrischen Leiter umwickelt ist, und eine Spule bildet, die Teil eines Wicklungssystems (4) des Stators (2) ist, wobei sich zwischen benachbarten Spulenabschnitten in einer Nut (11) ein Isolationskörper (15) befindet, der einen H-förmigen Querschnitt aufweist, wobei der Isolierkörper (15) Seitenteile (18) aufweist, **dadurch gekennzeichnet, dass** die Seitenteile (18) zumindest auf der Seite der Nutöffnung (13) starr ausgeführt sind, um den Spulenkörper (14) auf dem Zahn (10) zu fixieren, indem die Seitenteile des Isolierkörpers (15) in Ausnehmungen (16) der Zähne (10) zumindest abschnittsweise anliegen, eingreifen oder einrasten, wobei die Ausnehmungen (16) der Zähne im Bereich der Nutöffnung sin..

2. Stator (2) nach Anspruch 1, **dadurch gekennzeichnet, dass** zumindest Teile des Isolationskörpers (15) an den benachbarten Zähnen (10) einer Nut (11) positioniert sind.

3. Stator (2) nach einem der vorhergehenden Ansprüche, **dadurch gekennzeichnet , dass** der am Nutgrund (12) der Nut (11) anliegende Teil des Isolierkörpers (15) flexibel ausgeführt ist, um sich der Rundung am Nutgrund (12) anzupassen.

4. Stator (2) nach einem der vorhergehenden Ansprüche, **dadurch gekennzeichnet , dass** die Seitenteile des H-förmig ausgeführten Isolierkörpers (15) je nach Radius des Stators (2) gekrümmt ausgeführt sind.

5. Dynamoelektrische Maschine (1) insbesondere permanenterregte Synchronmaschine, mit einem Stator (2) nach einem der vorhergehenden Ansprüche.

## Claims

1. Stator (2) of a dynamo-electric rotary machine (1), which forms a hollow-cylindrical body, wherein correspondingly shaped metal sheets (3) are layered in the axial direction and embody said cylindrical hollow body with a stator bore (9), wherein the cylindrical hollow body has teeth (10) and axially running grooves (11) in the axial direction, wherein the parallel-edged or trapezoidal teeth (10) are surrounded by a coil body (14) in each case, wherein at least one electrical cable is wrapped around the coil body (14), and forms a coil which is part of a winding system (4) of the stator (2), wherein an insulating body (15) having an H-shaped cross-section is located between adjacent coil sections in a groove (11), wherein the insulating body (15) has side parts (18), **characterised in that** the side parts (18) are configured to be rigid at least on the side of the groove opening (13), in order to fix the coil body (14) to the tooth (10), by the side parts of the insulating body (15) abutting, engaging or latching into recesses (16) of the teeth (10), at least in sections, wherein the recesses (16) of the teeth are in the region of the groove opening.

2. Stator (2) according to claim 1, **characterised in that** at least parts of the insulating body (15) are positioned on the adjacent teeth (10) of a groove (11).

3. Stator (2) according to one of the preceding claims, **characterised in that** the part of the insulating body (15) abutting the groove base (12) of the groove (11) is configured to be flexible, in order to adapt to the curvature at the groove base (12).

4. Stator (2) according one of the preceding claims, **characterised in that** the side parts of the H-shaped insulating body (15) are configured to be curved depending on the radius of the stator (2).

5. Dynamo-electric machine (1), in particular permanently excited synchronous machine, with a stator (2) according to one of the preceding claims.

## Revendications

1. Stator (2) d'une machine (1) tournante dynamoélectrique, qui forme un corps cylindrique creux, dans lequel des tôles (3) conformées de manière adéquate sont empilées dans la direction axiale et forment ce corps creux cylindrique ayant un alésage (9) de stator, le corps creux cylindrique ayant, dans la direction axiale, des dents (10) et des encoches (11) s'étendant axialement, les dents (10) à flancs parallèles ou trapézoïdaux étant entourées chacune d'un corps (14) de bobine, le corps (14) de bobine étant bobiné d'au moins un conducteur électrique et formant une bobine, qui fait partie d'un système (4) d'enroulement du stator (2), dans lequel, pour des parties de bobine voisines entre elles, il se trouve dans une encoche (11) un corps (15) isolant, qui a une section transversale en forme de H, le corps (15) isolant ayant des parties (18) latérales, **caractérisé en ce que** les parties (18) latérales sont réalisées rigides, au moins du côté de l'ouverture (13) de l'encoche, afin d'immobiliser le corps (14) de bobine sur la dent (10), par le fait que les parties latérales du corps (15) isolant s'appliquent, pénètrent ou s'encliquettent, au moins par endroit, dans des évidements (16) des dents (10), les évidements (16) des dents étant dans la partie de l'ouverture de l'encoche.

2. Stator (2) suivant la revendication 1, **caractérisé en ce qu'**au moins des parties du corps (15) isolant sont mises en position sur les dents (10) voisines d'une encoche (11).

3. Stator (2) suivant l'une des revendications précédentes, **caractérisé en ce que** la partie, s'appliquant au fond (12) de l'encoche (11)**,** du corps (15) isolant est réalisée souple pour s'adapter à l'arrondi du fond (12) de la rainure.

4. Dispositif (7) de fermeture d'une encoche suivant l'une des revendications précédentes, dans lequel les parties latérales du corps (15) isolant réalisé en forme de H sont réalisées incurvées suivant le rayon du stator (2).

5. Machine (1) dynamoélectrique, notamment machine synchrone à excitation permanente, ayant un stator (2) suivant l'une des revendications précédentes.
